# EUROPÄISCHE PATENTANMELDUNG

(11) **EP 3 418 268 A1**
(43) Veröffentlichungstag der Anmeldung: **26.12.2018**
(21) Anmeldenummer: 18173260.3
(22) Anmeldetag: 18.05.2018
(51) Int. Cl.: C05F 3/00, C05F 11/02

(54) **VERFAHREN ZUR BEHANDLUNG VON GÜLLE**

(30) Priorität: 20.06.2017 DE 102017005770
(71) Anmelder: RWE Power AG, 45128 Essen (DE)
(72) Erfinder: Dr. Lange, Raimund, 50259 Pulheim (DE); Kuphal, Andreas, 45277 Essen (DE)
(74) Vertreter: Pfeffer, Michael

(57) **Zusammenfassung**

Die Erfindung betrifft ein Verfahren zur Behandlung von Gülle bei dem der Gülle ein fester Entwässerungsunterstützer zugegeben wird und die Gülle anschließend einer mechanischen Entwässerung zugeführt wird, dadurch gekennzeichnet, dass die mechanische Entwässerung mittels Pressschneckenseparator erfolgt.

## Beschreibung

Die Erfindung betrifft ein Verfahren zur Behandlung von Gülle, bei dem dieser ein fester Entwässerungsunterstützer zugegeben wird und anschließend eine mechanische Entwässerung erfolgt.

Ferner betrifft die Erfindung ein Bodenverbesserungsmittel, bestehend aus entwässerter Gülle und dem festen Entwässerungsunterstützer, hergestellt durch Anwendung des erfindungsgemäßen Verfahrens. Auch betrifft die Erfindung einen Flüssigdünger, bestehend aus dem wässrigen Teil der Gülle, hergestellt durch Anwendung des erfindungsgemäßen Verfahrens.

Unter Gülle im Sinne der vorliegenden Erfindung sind Exkremente aus einstreuarmer bis einstreuloser Nutztierhaltung mit verhältnismäßig hohem Wasseranteil zu verstehen. Solche Gülle weist beispielsweise Wasseranteile größer 90 Masseprozent auf. Je nach Beigabe von Einstreu und Wasser spricht man von Dick- oder Dünngülle, Schwemmmist oder Flüssigmist. Hohe Gehalte an gebundenem Stickstoff, Phosphor, Kalium und anderen Nährstoffen machen Gülle zu einem wichtigen Dünger, der überwiegend zur Feldausbringung vorgesehen ist. Grundsätzlich sind Verfahren bekannt, die eine Aufbereitung von Gülle zwecks anderweitiger Verwendung vorsehen.

Gülle wird wegen ihres Gehalts an vergärbarer Substanz auch in Biogasanlagen eingesetzt. Aufgrund eines sehr hohen Wassergehaltes und des niedrigen Anteils an vergärbarer Substanz hat die Verwendung von Gülle in Biogasanlagen den Nachteil, dass ein hoher Anteil von Wasser durch die Anlage zirkuliert werden muss.

Aufgrund der in der Gülle enthaltenen Pflanzennährstoffe, wie Stickstoff, Phosphor und Kalium bietet es sich an, Gülle als sogenannten Wirtschaftsdünger in der Landwirtschaft einzusetzen.
Die Möglichkeit der weiteren Nutzung von Gülle wird wesentlich durch deren Wassergehalt mitbestimmt. Liegt eine besonders wasserreiche Gülle vor, d.h. eine Gülle mit einem geringen Trockensubstanzanteil, ist deren Weiterverwendung nur eingeschränkt möglich. Die weitere Nutzung einer solchen Gülle ist insbesondere dadurch limitiert, dass ein Transport über weite Strecken aufgrund des hohen Wasseranteils unwirtschaftlich ist.

Die Nutzung von Gülle mit einem hohen Wassergehalt kann grundsätzlich dadurch verbessert werden, dass diese entwässert wird. Je nach eingesetztem Maschinentyp ist eine solche Entwässerung allerdings aufwändig und damit kostenintensiv.

Eine bekannte Möglichkeit für eine maschinentechnisch einfache mechanische Entwässerung von Gülle stellt der Einsatz eines Pressscheneckenseparators dar. In dem Gehäuse eines Pressschneckenseparators ist üblicherweise ein zylindrisches Sieb angeordnet, innerhalb dessen eine Schnecke rotiert. Mittels der Schnecke wird die Gülle durch den Pressschneckenseparator gefördert und mittels Druckaufbau durch ein zylindrisches Sieb gepresst. Durch das Sieb hindurch treten die flüssigen Anteile der Gülle, so dass sich innerhalb des Siebes ein Feststoffpropfen ausbildet. Durch die rotierende Schnecke wird der Feststoffpropfen an ein Ende des Pressschneckenseparators gefördert, um dort ausgegeben zu werden.

Die Entwässerung mittels Pressscheneckenseparator ist allerdings nicht für alle Güllezusammensetzungen geeignet, insbesondere bei besonders wasserreicher Gülle kann ein Pressschneckenseparator nicht mehr für die Entwässerung eingesetzt werden, da der Feststoffgehalt so gering ist, dass sich kein Feststoffpropfen mehr auf dem Sieb ausbildet und/oder der in der Gülle enthaltene Feststoff derart fein und/oder elastisch ist, dass er durch die Sieböffnungen gedrückt wird und sich keine Feststoffschicht ausbildet. Beispielsweise weist die Gülle von Mastschweinen typischerweise einen Trockensubstanzanteil von < 5 Masseprozent auf und stellt damit eine wasserreiche Gülle dar.

Der Erfindung liegt daher die Aufgabe zugrunde, ein Verfahren zur Behandlung von Gülle bereitzustellen, mit dem die Entwässerbarkeit von Gülle verbessert werden kann und das verhältnismäßig einfach praktisch umsetzbar ist.

Die Aufgabe wird gelöst mit den Merkmalen des Anspruchs 1. Vorteilhafte Ausgestaltungen ergeben sich aus den Unteransprüchen.

Wie sich aus Versuchen ergeben hat, lässt sich die mechanische Entwässerbarkeit von Gülle in überraschender und besonders vorteilhafter Weise dadurch verbessern, dass der Gülle ein Entwässerungsunterstützer zugegeben wird. Ferner lässt sich eine besonders praktikable mechanische Entwässerung der Gülle dadurch erreichen, dass diese zusammen mit dem Entwässerungsunterstützer in einem Pressschneckenseparator erfolgt.

So wird durch gezielte Zugabe des Entwässerungsunterstützers zu der Gülle die Bildung eines Feststoffpropfens im Pressschneckenseparator gefördert bzw. bei besonders wasserreicher Gülle erst ermöglicht. Der so gebildete Feststoffpropfen wirkt dann innerhalb des Pressschneckenseparators als zusätzliche Filterschicht, so dass auch sehr feine und/oder elastische Feststoffe in der Filterschicht zurückgehalten werden. Solche sehr feinen und/oder elastischen Feststoffe in der Gülle können ohne Entwässerungsunterstützer nicht in einem Pressschneckenseparator zurückgehalten werden, weil diese aufgrund ihrer hohen Feinheit und/oder Verformbarkeit durch die Sieböffnungen hindurch gedrückt werden.

Bei einer bevorzugten Variante des Verfahrens ist vorgesehen, dass die Gülle nach Zugabe des Entwässerungsunterstützers und vor der Entwässerung mittels Pressschneckenseparator gemischt und homogenisiert wird. Dadurch kann eine vorteilhafte Verteilung des Entwässerungsunterstützers in der Gülle erreicht werden. Insbesondere kann dadurch dem Aufschwimmen des Entwässerungsunterstützers auf der Gülleoberfläche entgegengewirkt werden. Für die Mischung und Homogenisierung kann die Gülle zusammen mit dem Entwässerungsunterstützer beispielsweise einer Mischschnecke zugeführt werden.

Die Mischung und Homogenisierung von Gülle und Entwässerungsunterstützer kann alternativ mittels Güllemischer in einem mobilen oder stationären Behälter erfolgen. Als Güllemischer wird ein Gerät bestehend aus einer Antriebseinheit, einem Metallgestänge und einer Durchmischungseinheit, z.B. in Form von Rührflügeln, bezeichnet. Die zur Mischung und Homogenisierung eingesetzte Vorrichtung kann mobil oder stationär sein.

Bei einer vorteilhaften Variante des Verfahren beträgt die Zugabemenge des Entwässerungsunterstützers maximal 25 Masseprozent bezogen auf die zu behandelnde Güllemasse. Als besonders vorteilhaft hat sich eine Zugabemenge von 10 bis 20 Masseprozent herausgestellt.

Mit dem Verfahren lässt sich besonders bevorzugt Gülle mit einem hohen Wasseranteil (z.B. größer 90 Masseprozent) bzw. niedrigen Trockensubstanzanteil (z.B. kleiner 10 Masseprozent) behandeln. Mit Trockensubstanz ist jener Bestandteil der Gülle gemeint, der nach Abzug der Masse des enthaltenen Wassers übrig bleibt. Das Verfahren ist bevorzugt für Gülle mit einem Trockensubstanzanteil von maximal 10 Masseprozent, insbesondere von maximal 5 Masseprozent, vorteilhaft geeignet.

Bei bestimmten Weiterverwendungen von entwässerter Gülle ist ein vorgebbarer Trockensubstanzanteil relevant. Durch dosierte Zugabe des Entwässerungsunterstützers kann entsprechend auf die Entwässerung im Pressschneckenseparator Einfluss genommen werden und somit auch auf den erreichbaren Trockensubstanzanteil der entwässerten Gülle (des Feststoffs). In einer weiteren vorteilhaften Ausgestaltung des Verfahrens ist der Trockensubstanzanteil der entwässerten Gülle über die Zugabemenge des Entwässerungsunterstützers vorgebbar, insbesondere derart, dass ein Trockensubstanzanteil von mindestens 25 Masseprozent, besonders bevorzugt ein Trockensubstanzanteil im Bereich von 30 bis 35 Masseprozent, eingehalten wird.

Die für das Verfahren nötigen Behälter können stationär oder mobil ausgebildet sein. Als stationäre Behälter können beispielsweise Lagerbecken, Silos oder Tanks, insbesondere in einem landwirtschaftlichen Betrieb, dienen. Alternativ können auch mobile Behälter, z.B. in Form von Feldrandcontainern, verwendet werden. Auch eine Verwendung von stationären und mobilen Behältern ist möglich, z.B. in Form eines Lagerbeckens für die Gülle in Verbindung mit einem Feldrandcontainer, in dem eine Teilmenge der Gülle die Zugabe des Entwässerungsunterstützers erfolgt.

Das Verfahren kann kontinuierlich oder diskontinuierlich betrieben werden. Möglich ist auch ein quasi-kontinuierlicher Betrieb derart, dass zumindest zwei Behälter vorgesehen sind. Mittels Fördereinrichtung wird zunächst der erste Behälter mit der Gülle und dem Entwässerungsunterstützer befüllt. Anschließend werden die Fördereinrichtungen versetzt und der zweite Behälter wird mit der Gülle und dem Entwässerungsunterstützer befüllt. Während der Befüllung des zweiten Behälters wird dem ersten Behälter das Material entnommen und dem Pressschneckenseparator zugeführt. Ist das Material aus dem ersten Behälter entwässert, wird der Pressschneckenseparator umgesetzt bzw. die Anschlüsse gewechselt, so dass das Material aus dem zweiten Behälter entwässert werden kann. Alternativ kann eine Umschaltvorrichtung zum Umschalten der Förderwege eingesetzt werden. Durch Wechsel der Teilschritte "Zugabe des Entwässerungsunterstützer" und "Entwässerung" kann somit ein quasi-kontinuierlicher Betrieb erreicht werden. Natürlich ist ein solcher Betrieb auch mit mehr als zwei Behältern realisierbar, um z.B. die Verweilzeit des Entwässerungsunterstützers in der Gülle zu beeinflussen.

In einer weiteren Variante des Verfahrens werden die für die einzelnen Teilschritte nötigen Arbeitsmaschinen direkt von mobilen, landwirtschaftlichen Fahrzeugen, wie Traktoren oder Schleppern, angetrieben. Bei solchen Fahrzeugen ist in der Regel eine Zapfwelle vorgesehen, über die die Kraft des Motors mittels Gelenkwelle(n) auf ein Arbeitsgerät übertragen werden kann. Insbesondere können mittels einer solchen direkten Kraftübertragung Fördermaschinen, Mischer und/oder ein Pressschneckenseparator angetrieben werden, ohne die Notwendigkeit des Anschlusses der Arbeitsmaschinen an ein elektrisches Stromversorgungsnetz.

Alternativ oder zusätzlich können elektrisch betriebene Arbeitsmaschinen eingesetzt werden. Die Bereitstellung der notwendigen Elektroenergie kann durch ein elektrisches Netz erfolgen. Alternativ können mobile oder stationäre Stromerzeuger zur Bereitstellung der Elektroenergie verwendet werden können. Solche Stromerzeuger können insbesondere dann eingesetzt werden, wenn die Leistungsfähigkeit des vorhandenen elektrischen Netzes unzureichend ist oder kein elektrisches Netz verfügbar ist. Bei den Stromerzeugern kann es sich insbesondere um einen dieselbetriebenen Stromerzeuger handeln oder um einen mit der Zapfwelle eines landwirtschaftlichen Fahrzeugs verbindbaren Stromerzeuger.

Der in dem Verfahren eingesetzte Entwässerungsunterstützer kann aus einem abbaubaren Fasermaterial bestehen. Unter abbaubar ist in diesem Zusammenhang die Eigenschaft des Fasermaterials zu verstehen, durch biologische, chemische oder physikalische Abbauprozesse zersetzt werden zu können. Eine solche Abbaubarkeit ist für das Verfahren vorteilhaft, damit der entwässerte Feststoff, d.h. das Gemisch aus Feststoff aus der Gülle und des Entwässerungsunterstützers einer Weiterverwendung in der Landwirtschaft, z.B. in Form eines Bodenverbesserers, zugeführt werden kann. Insbesondere können für die Weiterverwendung in der Landwirtschaft Anforderungen hinsichtlich einer zeitlichen Abbaubarkeit, z.B. in Form einer Abbaurate, bestehen. Beispielsweise können Abbauraten in Form einer zweijährigen biologischen Abbaubarkeit vorgeschrieben sein, die beim Einsatz eines abbaubaren Entwässerungsunterstützers einhaltbar sind.

Werden abbauresistente bzw. persistente Stoffe, wie z.B. bestimmte Kunstoffe, als Entwässerungsunterstützer eingesetzt, ist eine Weiterverwendung der entwässerten Gülle in der Landwirtschaft nicht mehr möglich. Die entwässerte Gülle und der Entwässerungsunterstützer können dann einer thermischen Verwertung zugeführt werden. Bei einer solchen thermische Verwertung werden die Pflanzennährstoffe allerdings zerstört.

Als vorteilhafte Ausgangsstoffe für den Entwässerungsunterstützer haben sich insbesondere Stroh, Holz, Kokosfasern oder Braunkohlenxylit herausgestellt. Solche Stoffe verfügen beispielsweise über eine hinreichende Abbaubarkeit. Je nach Güllequalität und Prozessführung der Entwässerung können auch Mischungen von abbaubaren Fasermaterialien als Entwässerungsunterstützer eingesetzt werden.

Als Braunkohlenxylit wird ein in der Braunkohle enthaltenes Material bezeichnet, welches im Gegensatz zur klassischen Braunkohle noch eine ausgeprägte Faserstruktur aufweist und dessen geochemische Umwandlung vom ursprünglichen Pflanzenmaterial zu Braunkohle noch nicht vollständig abgeschlossen ist. Solcher Braunkohlenxylit verfügt aufgrund seiner ausgeprägten Faserstruktur über grundlegend andere strukturelle Eigenschaften als die klassische Braunkohle, beispielsweise ist Braunkohlenxylit im Gegensatz zu klassischer Braunkohle nicht sprödbrechend.

Je nach Örtlichkeit, an dem das Verfahrens angewendet wird, kann es zur Verringerung des Transportaufwands für den Entwässerungsunterstützer vorteilhaft sein, diesen in kompaktierter Form, z.B. in Form von Ballen, bereitzustellen. Für den Einsatz im Verfahren ist dann eine Auflösung der Kompaktierung des Entwässerungsunterstützers nötig, die z.B. mit einem Ballenauflöser vorgenommen werden kann, so dass die ursprüngliche Faserstruktur des Entwässerungsunterstützers wieder hergestellt wird.

Ein besonders vorteilhafter Entwässerungsunterstützer lässt sich dadurch bereitstellen, dass ungetrockneter, grubenfeuchter Braunkohlenxylit eingesetzt wird. Ein solcher ungetrockneter, grubenfeuchter Braunkohlenxylit ist durch einen typischen Wassergehalt im Bereich von 40 bis 60 Masseprozent gekennzeichnet. Ein entsprechend geeigneter Braunkohlenxylit lässt sich z.B. dadurch bereitstellen, dass Braunkohlenxylit enthaltende Braunkohle im Tagebau gewonnen wird und einer Vorzerkleinerung zugeführt wird. Aufgrund des unterschiedlichen Zerkleinerungsverhaltens von Braunkohle und Braunkohlexylit lässt sich mit der Vorzerkleinerung eine Auflösung des Verbundes aus Braunkohle und Braunkohlenxylit erreichen, so dass der Braunkohlexylit, z.B. mittels Siebung, von der restlichen Braunkohle abtrennbar wird und der Verwendung als Entwässerungsunterstützer zugeführt werden kann. Durch entsprechende Bereitstellung des Braunkohlenxylits kann dessen ausgeprägte Faserstruktur in besonders vorteilhafter Weise genutzt werden, da sich damit eine besonders wirksame Entwässerungsschicht im Pressschneckenseparator erzeugen lässt.

Je nach Beschaffenheit der Gülle ist eine Vorbehandlung des Entwässerungsunterstützer erforderlich, um auf die Entwässerung im Pressschneckensepartor gezielter Einfluss nehmen zu können. Als besonders vorteilhafte Variante einer Vorbehandlung hat sich eine auffasernde Zerkleinerung erwiesen. Mittels auffasernder Zerkleinerung lässt sich die Faserstruktur des Entwässerungsunterstützer vorteilhaft dahingehend beeinflussen, dass die mittlere Faserlänge verringert und/oder die Faseranzahl erhöht werden kann. Eine solche auffasernde Zerkleinerung kann beispielsweise mittels Doppelschneckenextruder realisiert werden. Alternativ lässt sich eine auffasernde Zerkleinerung beispielsweise mittels Prallmühlen unter Verwendung von Siebbelägen mit Reibeisen- oder Conidurlochung erreichen.

Die Verwendung von abbaubaren Faserstoffen als Entwässerungsunterstützer erlaubt die Weiterverwendung des Gemisches aus entwässerter Gülle und Entwässerungsunterstützer in der Landwirtschaft, z.B. als Wirtschaftsdünger, Bodenverbesserer oder Kompost. Insbesondere kann mit dem Entwässerungsunterstützer eine vorteilhafte Anreicherung von Pflanzennährstoffen in der festen Phase der Gülle erreicht werden. Die in der Gülle enthaltenen Pflanzennährstoffe gehen dadurch nicht verloren. Die Wirkung von entwässerter Gülle und Entwässerungsunterstützer als Bodenverbesserer wird durch den Kohlenstoffgehalt des Entwässerungsunterstützers vorteilhaft verbessert.

Grundsätzlich ist auch Braunkohlenxylit als abbaubar im vorgenannten Sinne anzusehen. Gegenüber typischen biogenen Stoffen, wie Holz, Stroh, Kokosfasern oder dergleichen, weist Braunkohlenxylit aber eine deutlich langsamere Abbaurate auf. Wie sich aus Versuchen überraschend ergeben hat, lässt sich diese langsamere Abbaurate des Braunkohlenxylits in vorteilhafter Weise zur Verbesserung der Eigenschaften der entwässerten Gülle verwenden. So weist die unter Einsatz von Braunkohlenxylit als Entwässerungsunterstützer entwässerte Gülle eine vorteilhaft langsame Abbaurate auf, was in Verbindung mit der ausgeprägten Faserstruktur und den in der entwässerten Gülle vorliegenden Pflanzennährstoffen zu einem besonders wirksamen und langzeitstabilen Bodenverbesserer führt.

Die bei der Entwässerung der Gülle entstehende flüssige Phase kann beispielsweise ohne weitere Aufbereitung als flüssiger Dünger verwendet werden. Dieser flüssige Dünger ist besonders für die Feldausbringung geeignet, da er aufgrund der abgetrennten Feststoffe hinsichtlich der Nährstoffe abgereichert ist. Dadurch wird die Gefahr einer Überdüngung verringert. Insbesondere ist die Phosphatfracht der so erhaltenen flüssigen Phase signifikant geringer als die Phosphatfracht der unbehandelten Gülle.

Wird Braunkohlenxylit als Entwässerungsunterstützer eingesetzt, kann ferner in besonders vorteilhafter Weise auch eine Abreicherung von Stickstoff in der flüssigen Phase erreicht werden. So reagieren die im Braunkohlenxylit vorhandenen Huminsäuren mit Stickstoff zu Humaten, was mit einer Abreicherung von Stickstoff in der flüssigen Phase einhergeht.

Nachfolgend wird anhand der beigefügten Figuren näher auf zwei Ausführungsbeispiele der Erfindung eingegangen.

Es zeigen:
Figur 1: eine Prinzipdarstellung einer ersten Ausführungsform von zusammenwirkenden Anlagenteilen zur Durchführung des Verfahrens mit kompaktiertem Stroh als Entwässerungsunterstützer
Figur 2: eine Prinzipdarstellung einer zweiten Ausführungsform von zusammenwirkenden Anlagenteilen zur Durchführung des Verfahrens mit Braunkohlenxylit als Entwässerungsunterstützer und mit Mischung/Homogenisierung nach der Zugabe des Entwässerungsunterstützers.

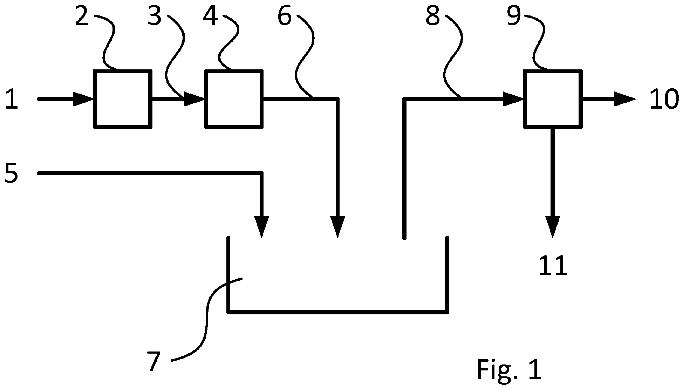

Figur 1 zeigt eine Prinzipdarstellung des Verfahrens mit Stroh als Entwässerungsunterstützer. Strohballen 1 werden einer Vorbehandlung mittels Ballenauflöser 2 zugeführt. Das vereinzelte Stroh 3 wird einer Förder- und Dosiereinrichtung 4 zugeführt, über die die zugegebene Strohmenge vorgebbar ist. Gülle 5 und das dosierte Stroh 6 werden einem Lagerbecken 7 zugeführt, das als Zwischenpuffer dient.

Die Mischung aus Entwässerungsunterstützer in Form von Stroh und Gülle 8 wird aus dem Lagerbecken 7 dem Pressschneckenseparator 9 zugeführt. Im Pressschneckenseparator 9 erfolgt die Entwässerung der Gülle unter Ausnutzung der vorteilhaften Wirkung des Entwässerungsunterstützers. Dem Pressschneckenseparator 9 können ein Stoffstrom entwässerte Gülle mit Entwässerungsunterstützer in Form von Stroh 10 und eine flüssige Phase 11 entnommen werden.

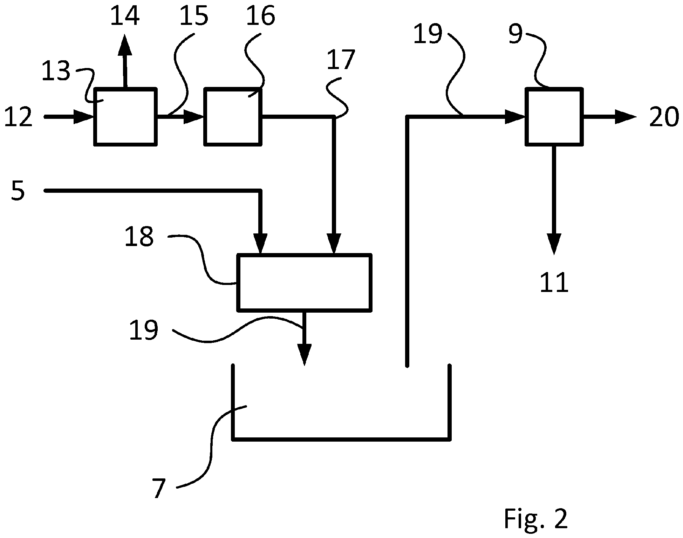

Figur 2 zeigt eine Prinzipdarstellung des Verfahrens mit Braunkohlenxylit als Entwässerungsunterstützer und mit Mischung/Homogenisierung des Entwässerungsunterstützers mit der Gülle. Eine Braunkohlenxylit enthaltende Braunkohle 12 wird zunächst einer Vorzerkleinerung 13 zugeführt. Dort erfolgt neben der Zerkleinerung auch die Trennung in Braunkohle 14 und Braunkohlenxylit 15. Der Braunkohlenxylit 15 wird einem Doppelschneckenextruder 16 zur Vorbehandlung in Form einer auffasernden Zerkleinerung zugeführt. Der vorbehandelte Braunkohlenxylit 17 wird anschließend zusammen mit der Gülle 5 einer Mischeinrichtung 18 zugeführt. Die Mischung aus Braunkohlenxylit und Gülle 19 wird anschließend in ein Lagerbecken 7 geleitet und dort zwischengepuffert. Aus dem Lagerbecken 7 wird die Mischung aus Braunkohlenxylit und Gülle 19 einem Pressschneckenseparator 9 zugeführt und dort entwässert. Dem Pressschneckenseparator können entwässerte Gülle mit Braunkohlenxylit 20 und eine flüssige Phase 11 entnommen werden.

### Bezugszeichenliste

- 1: Strohballen
- 2: Ballenauflöser
- 3: vereinzeltes Stroh
- 4: Förder- und Dosiereinrichtung
- 5: Gülle
- 6: dosiertes, vereinzeltes Stroh
- 7: Lagerbecken
- 8: Mischung aus Gülle und Entwässerungsunterstützer in Form von Stroh
- 9: Pressschneckenseparator
- 10: entwässerte Gülle und Entwässerungsunterstützer in Form von Stroh
- 11: flüssige Phase der Gülle
- 12: Braunkohlenxylit enthaltende Braunkohle
- 13: Vorzerkleinerung
- 14: Braunkohle
- 15: Braunkohlenxylit
- 16: Doppelschneckenextruder
- 17: vorbehandelter Braunkohlenxylit
- 18: Mischeinrichtung
- 19: Mischung aus Gülle und Entwässerungsunterstützer in Form von vorbehandeltem Braunkohlenxylit
- 20: entwässerte Gülle und Entwässerungsunterstützer in Form von vorbehandeltem Braunkohlenxylit

## Patentansprüche

1. Verfahren zur Behandlung von Gülle (5) bei dem der Gülle (5) ein fester Entwässerungsunterstützer (6, 17) zugegeben wird und die Gülle anschließend einer mechanischen Entwässerung zugeführt wird, **dadurch gekennzeichnet, dass** die mechanische Entwässerung mittels Pressschneckenseparator (9) erfolgt.

2. Verfahren nach Anspruch 1, **dadurch gekennzeichnet, dass** nach der Zugabe des Entwässerungsunterstützers (6, 17) und vor der Entwässerung eine Mischung und Homogenisierung erfolgt.

3. Verfahren nach einem der vorherigen Ansprüche, **dadurch gekennzeichnet, dass** die Zugabemenge des Entwässerungsunterstützers (6, 17) maximal 25 Masseprozent bezogen auf die Gülle (5) beträgt, bevorzugt 10 bis 20 Masseprozent.

4. Verfahren nach einem der vorherigen Ansprüche, **dadurch gekennzeichnet, dass** die zu behandelnde Gülle (5) einen Trockensubstanzanteil von maximal 10 Masseprozent, bevorzugt von maximal 5 Masseprozent aufweist.

5. Verfahren nach einem der vorherigen Ansprüche, **dadurch gekennzeichnet, dass** der Trockensubstanzanteil der festen Phase (10, 20) nach der Entwässerung minimal 25 Masseprozent beträgt, besonders bevorzugt im Bereich von 30 Masseprozent bis 35 Masseprozent liegt.

6. Verfahren nach einem der vorherigen Ansprüche, **dadurch gekennzeichnet, dass** die Gülle (5) und der Entwässerungsunterstützer (6, 17) einem stationären oder mobilen Behälter (7) zugegeben werden und/oder dass der Pressscheckenseparator (9) mobil oder stationär ausgebildet ist.

7. Verfahren nach einem der vorherigen Ansprüche, **dadurch gekennzeichnet, dass** der Entwässerungsunterstützer (6, 17) aus einem abbaubaren Fasermaterial, insbesondere aus Stroh, Holz, Kokosfasern und/oder Braunkohlenxylit besteht.

8. Verfahren nach Anspruch 7, **dadurch gekennzeichnet, dass** ungetrockneter, grubenfeuchter Braunkohlenxylit verwendet wird.

9. Verfahren nach Anspruch 7 oder 8, **dadurch gekennzeichnet, dass** der Entwässerungsunterstützer (6, 17) mittels auffasernder Zerkleinerung vorbehandelt wird.

10. Verfahren nach einem der vorherigen Ansprüche, **dadurch gekennzeichnet, dass** die flüssige Phase der Gülle (11) ohne weitere Aufbereitung als flüssiger Dünger verwendet wird.

11. Bodenverbesserungsmittel, bestehend aus entwässerter Gülle und einem Entwässerungsunterstützer (10, 20), **dadurch gekennzeichnet, dass** zu dessen Herstellung das Verfahren nach einem der Ansprüche 1 bis 10 verwendet worden ist.

12. Flüssigdünger, bestehend aus der flüssigen Phase der Gülle (11), **dadurch gekennzeichnet, dass** zu dessen Herstellung das Verfahren nach einem der Ansprüche 1 bis 10 verwendet worden ist.
